# EUROPEAN PATENT APPLICATION

(11) **EP 4 495 054 A1**
(43) Date of publication of application: **22.01.2025**
(21) Application number: 23186287.1
(22) Date of filing: 19.07.2023
(51) Int. Cl.: C01B 3/04

(54) **AUTOTHERMAL AMMONIA CRACKING PROCESS**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: ULBER, Dieter, 60439 Frankfurt am Main (DE); JAROLIN, Kolja, 60439 Frankfurt am Mai (DE); LUTZ, Michael, 60439 Frankfurt am Main (DE); DASGUPTA, Sayan, 60439 Frankfurt am Main (DE)
(74) Representative: Air Liquide

(57) **Abstract**

Process for producing hydrogen from an ammonia feed stream, comprising the following steps :
- non-catalytic partial oxidation of the ammonia feed stream with an oxidant gas, thereby producing steam from the partial oxidation, remaining amounts of ammonia not being oxidized;
- endothermic cracking conversion of part of the remaining amounts of ammonia, thereby producing a cracked gas comprising hydrogen, nitrogen and some unconverted ammonia;
- mixing of the cracked gas with the steam produced from the partial oxidation, thereby obtaining an effluent gas;
- condensing of the steam produced from the partial oxidation, thereby removing at least part of the unconverted ammonia from the effluent gas by absorption.

## Description

The field of the present invention is that of a process for producing hydrogen by an endothermic cracking reaction of an ammonia feed stream.

The production of an effluent gas comprising hydrogen and nitrogen by an endothermic cracking reaction of an ammonia feed stream can be done in a catalytic reactor at elevated temperatures, generally from 500°C to 850°C. Such a unit typically comprises a metallic shell, a catalyst and a heat source to provide heat to the endothermic reaction. In autothermal ammonia cracking processes, the heat is supplied directly by partial oxidation of the reactor feed. These autothermal processes allow large scale hydrogen production from ammonia. However, the process requires a high quantity of heat and energy, and an unconverted part of the ammonia feed stream is still present in the effluent gas. This unconverted ammonia can be a poison for some applications of the produced hydrogen, such as fuel cells, and can be harmful for a downstream equipment, such as a purification/separation unit of the nitrogen and hydrogen containing effluent gas.

It is an aim of the present invention to overcome these problems and to provide a process in which the unconverted ammonia following the ammonia cracking reaction is removed in an energy efficient manner.

For this purpose, the invention proposes a process for producing hydrogen from an ammonia feed stream, comprising the following steps :
- non-catalytic partial oxidation of the ammonia feed stream with an oxidant gas, thereby producing steam from the partial oxidation, remaining amounts of ammonia not being oxidized;
- endothermic cracking conversion of part of the remaining amounts of ammonia, thereby producing a cracked gas comprising hydrogen, nitrogen and some unconverted ammonia;
- mixing of the cracked gas with the steam produced from the partial oxidation, thereby obtaining an effluent gas;
- condensing of the steam produced from the partial oxidation (condensing step), thereby removing at least part of the unconverted ammonia from the effluent gas by absorption.

Absorbing the unconverted ammonia in the water produced as steam from the partial oxidation reduces the need to import additional water downstream the endothermic cracking conversion. An unconverted ammonia depleted effluent gas is obtained.

In one embodiment, the oxidant gas is an oxygen containing gas, such as air, an oxygen containing gas having more than 21% of oxygen or pure oxygen.

In one embodiment, the endothermic cracking conversion is performed by contact with a catalyst, such as a nickel containing catalyst.

In one embodiment, the non-catalytic partial oxidation and the endothermic cracking conversion are performed in a single reactor vessel. The endothermic cracking conversion performed by contact with a catalyst typically occurs in a catalytic reaction zone of the reactor vessel, downstream the non-catalytic partial oxidation.

In one embodiment, the process comprises a step of providing a liquid ammonia feedstock and a step of vaporizing the liquid ammonia feedstock, thereby obtaining a vaporized ammonia feed stream in gaseous form being the ammonia feed stream.

In one embodiment, the process comprises a step of pre-heating the ammonia feed stream, in particular the vaporized ammonia feed, at a feed pre-heat temperature prior to the non-catalytic partial oxidation. In particular, the feed pre-heat temperature is adjusted to control an amount of steam produced from the partial oxidation.

In one embodiment, the reactor vessel comprises a burner and the non-catalytic partial oxidation of the ammonia feed stream is performed by partially burning the ammonia feed stream, in particular in a gaseous form, with the burner. In particular, the burner comprises a burner nozzle and the oxidant gas is introduced into the reactor vessel through the burner nozzle.

In one embodiment, the process comprises a step of introducing moderator steam into the reactor vessel to protect the burner nozzle from overheating and a step of mixing of the moderator steam with the effluent gas. In particular, the oxidant gas is centrally introduced through the burner nozzle and the moderator steam is concentrically introduced through the burner nozzle around the oxidant gas.

In one embodiment, the moderator steam mixes in the effluent gas with the steam produced from the partial oxidation, thereby obtaining a water steam fraction of the effluent gas and the water steam fraction is condensed in the condensing step, thereby removing at least part of the unconverted ammonia from the effluent gas by absorption.

In one embodiment, the condensing of the steam produced from the partial oxidation produces an unconverted ammonia solution comprising the absorbed unconverted ammonia or the condensing of the water steam fraction produces an unconverted ammonia solution comprising the absorbed unconverted ammonia.

In one embodiment, the process comprises a step of adjusting the amount of moderator steam introduced into the reactor vessel to control the concentration of unconverted ammonia in the unconverted ammonia solution. In particular, the process comprises a step of measuring the concentration of unconverted ammonia in the unconverted ammonia solution, a step of comparing the measured concentration with a predetermined first threshold value of unconverted ammonia concentration and a step of increasing the amount of moderator steam introduced into the reactor vessel if the measured concentration is above said first threshold value. In particular, the process comprises a step of comparing the measured concentration with a predetermined second threshold value of unconverted ammonia concentration and a step of decreasing the amount of moderator steam introduced into the reactor vessel if the measured concentration is below said second threshold value. The first and second threshold values can be the same value.

In one embodiment, the process comprises a step of discharging the effluent gas from the reactor vessel, prior to condensing the steam produced from the partial oxidation or prior to condensing the water steam fraction.

In one embodiment, the non-catalytic partial oxidation of the ammonia feed stream produces nitrogen oxides mixed within the effluent gas and the process comprises a step of adjusting the amount of moderator steam introduced into the reactor vessel to control the amount of nitrogen oxides in the effluent gas. In particular, the process comprises a step of measuring the concentration of nitrogen oxides in the effluent gas, in particular in the discharged effluent gas, a step of comparing the measured concentration with a predetermined first threshold value of nitrogen oxides concentration and a step of increasing the amount of moderator steam introduced into the reactor vessel if the measured concentration is above said first threshold value. In particular, the process comprises a step of comparing the measured concentration with a predetermined second threshold value of nitrogen oxides concentration and a step of decreasing the amount of moderator steam introduced into the reactor vessel if the measured concentration is below said second threshold value. The first and second threshold values can be the same value.

In one embodiment, the effluent gas, in particular the discharged effluent gas, has a water content comprised between 10 and 40%.

In one embodiment, the process comprises a step of providing a secondary ammonia feed stream and performing a secondary endothermic cracking conversion of at least part of the secondary ammonia feed stream in a secondary cracker heated by the discharged effluent gas, thereby producing a secondary effluent gas comprising hydrogen and nitrogen. The secondary effluent gas can be combined with the effluent gas discharged from the reactor vessel. The secondary ammonia feed stream can be derived from the ammonia feed stream.

In one embodiment, the process comprises a step of endothermic pre-cracking conversion of the ammonia feed stream prior to the non-catalytic partial oxidation, thereby producing a pre-cracked ammonia feed stream comprising hydrogen, nitrogen and uncracked ammonia, the non-catalytic partial oxidation step of the ammonia feed stream comprising a non-catalytic partial oxidation of the pre-cracked ammonia feed stream. In particular, the endothermic pre-cracking conversion is performed in a pre-cracker heated by the discharged effluent gas. Alternatively, the endothermic pre-cracking conversion is performed in an adiabatic pre-cracker.

In one embodiment, the process comprises a step of pre-cooling the effluent gas prior to condensing the steam produced from the partial oxidation. In particular, the step of pre-cooling the effluent gas is performed after the step of discharging the effluent gas from the reactor vessel. The step of pre-cooling the effluent gas can be performed by direct water quench. In particular, the direct water quench can be performed in a quench vessel directly connected to the reactor vessel.

In one embodiment, the condensing of the steam produced from the partial oxidation or the condensing of the water steam fraction is performed by cooling the effluent gas, for example by water-cooling, by air-cooling, by heat exchange between the effluent gas and the liquid ammonia feedstock, by cooling the effluent gas in a reboiler or by a combination of these options. The direct water quench may also cool the effluent gas after the pre-cooling, thereby condensing the steam produced from the partial oxidation.

In one embodiment, the condensing of the steam produced from the partial oxidation or the condensing of the water steam fraction is performed in a wash column. In particular, the condensing of the steam produced from the partial oxidation or the condensing of the water steam fraction is performed in an overhead part of the wash column. Alternatively, the condensing of the steam produced from the partial oxidation or the condensing of the water steam fraction is performed upstream a wash column.

In one embodiment, no additional water is introduced into the wash column. Alternatively, some additional water is introduced into the wash column. The additional water dilutes the condensed unconverted ammonia solution as a side effect. In particular, the additional water is sprayed into the wash column.

In one embodiment, part of the unconverted ammonia is removed from the effluent gas by absorption by the condensing of the steam produced from the partial oxidation or by the condensing of the water steam fraction and a remaining portion of unconverted ammonia is removed by further absorption in the wash column. A higher purity of the effluent gas can be reached. In particular, the further absorption is performed by recirculating a part of the unconverted ammonia solution in the wash column. In particular, the remaining portion of unconverted ammonia is removed by further absorption by contact with means of the wash column to increase a mass and heat transfer, such as a random packing, a structured packing, at least one bottom sieve or tray.

In one embodiment, the unconverted ammonia removed from the effluent gas by absorption is recovered in a gaseous form. In particular, the unconverted ammonia removed by absorption is recovered in a gaseous form by distillation of the unconverted ammonia solution, for example after discharging the unconverted ammonia solution from the wash column. The unconverted ammonia recovered in gaseous form can be recycled to the non-catalytic partial oxidation step. In particular, the unconverted ammonia recovered in gaseous form is recycled as part of the ammonia feed stream, for example after compression.

In one embodiment, at least part of the unconverted ammonia solution is vaporized and introduced as the moderator steam into the reactor vessel. In particular, the at least part of the unconverted ammonia solution is pumped before it is vaporized. The unconverted ammonia solution may be vaporized by heat exchange with an external heat source, such as a flue gas or a gas turbine exhaust gas.

In one embodiment, a first part of the unconverted ammonia solution is vaporized and introduced as moderator steam into the reactor vessel and the unconverted ammonia of a second part of the unconverted ammonia solution is recovered in a gaseous form, in particular by distillation of said second part. The unconverted ammonia of the second part of the unconverted ammonia solution can be recycled to the non-catalytic partial oxidation step. In particular, the unconverted ammonia recovered in gaseous form is recycled as part of the ammonia feed stream, for example after compression.

In one embodiment, the unconverted ammonia depleted effluent gas is purified, for example by pressure swing adsorption, thereby producing a hydrogen product stream.
[Fig 1] is a schematic view of a reactor vessel suitable for implementing the process according to the invention,
[Fig. 2] is an enlarged view of the burner nozzle of the autothermal cracker of figure 1,
[Fig. 3] is a schematic view of the process according to a first embodiment, in a first variant,
[Fig. 4] is a schematic view of the process according to the first embodiment, in a second variant,
[Fig. 5] is a schematic view of the process according to a second embodiment.

The following is a description of embodiments of the invention. The scope of the invention is not limited by these particular embodiments.

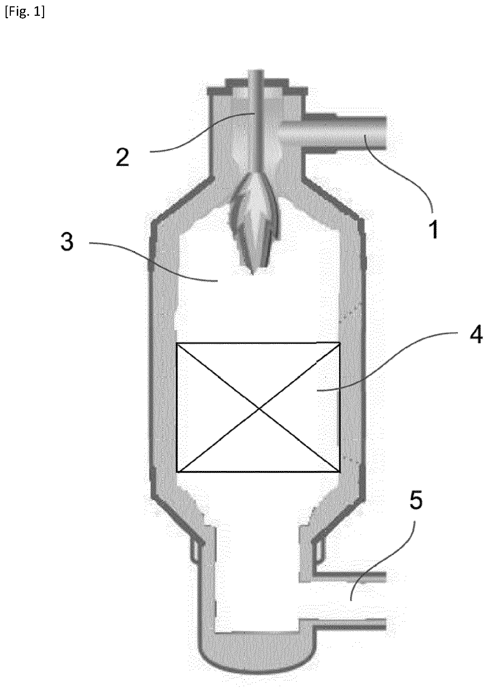

Figure 1 is a schematic view of a reactor vessel 1 for performing an autothermal ammonia cracking reaction. An ammonia feed stream is fed through a reactor vessel inlet 1 to a burner part 3 of the reactor vessel 1. A liquid ammonia feedstock can be vaporized to obtain the ammonia feed stream in a gaseous form. The ammonia feed stream in gaseous form can be preheated at a feed pre-heat temperature of around 100°C.

Air is fed as an oxidant gas through a nozzle 2 of the burner 3. Part of the ammonia feed stream, along with the oxidant gas, serve as reactants for a non-catalytic oxidation : the ammonia feed stream is non-catalytically partially oxidized. The burner 3 is configured as a mixer for the reactants. The combustion reaction produces steam, ie. water steam, nitrogen and heat. In some cases, the combustion reaction also produces nitrogen oxides (NOx). Remaining amounts of the ammonia feed stream are not combusted. The produced heat serves as a heat input to an endothermic cracking conversion of a part of the non-combusted remaining amounts of ammonia. The endothermic cracking conversion is performed in a catalytic reaction zone 4 of the reactor vessel 1, downstream the burner 3. The catalytic reaction zone 4 comprises a catalyst, such as a nickel containing catalyst. The endothermic cracking conversion produces a cracked gas comprising hydrogen, nitrogen and some unconverted ammonia.

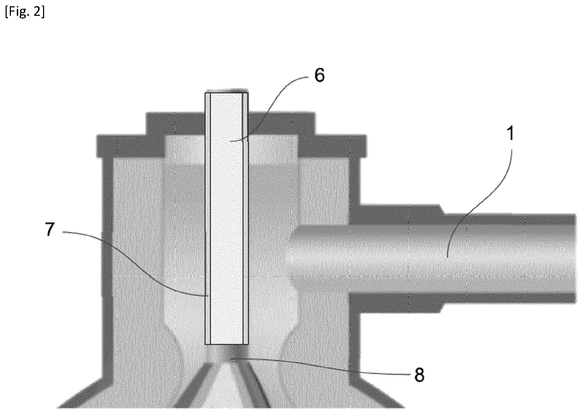

Figure 2 is an enlarged view of the nozzle 2. The nozzle comprises two supply channels arranged co-axially. A central channel 6 provides the air as an oxidant to the burner 3. An outer channel forms with the central channel 6 an annular gap 7 to introduce into the reactor vessel a moderator steam. The moderator steam acts as a shield 8 surrounding the oxidant gas flow, such that the oxidant gas runs away from the burner nozzle 2 and then only comes into contact with part of the ammonia feed stream for the combustion. The combustion flame is not in the direct vicinity of the burner nozzle. It is rather "pushed away" by the moderator steam shield 8.

The steam produced from the partial oxidation is mixed with the cracked gas and the moderator steam in the reactor vessel. The mixture, called effluent gas, has a water content typically between 10 and 40%, for example around 18%, and around 0,5% of unconverted ammonia. The effluent gas is discharged from the reactor vessel 1 at a temperature of around 700°C. The overall steam contained in the effluent gas comprises the steam produced from the partial oxidation and the moderator steam, which are mixed together in the effluent gas as a water steam fraction of the effluent gas.

The effluent gas is cooled and the water steam fraction of the effluent gas is condensed to liquid water in a downstream condenser. A part of the unconverted ammonia is absorbed in the liquid water, thereby making an unconverted ammonia solution separated from the effluent gas. The water content of the effluent gas exiting the condenser has decreased to 0,3 %, and its unconverted ammonia content has decreased to 0,09%. It is also possible to pre-cool the effluent gas prior to the condensation, for example by direct water quench : quench water comes into direct contact with the effluent gas, thereby cooling the effluent gas.

The unconverted ammonia solution is advantageously vaporized and introduced as moderator steam into the reactor vessel 1. This way, the unconverted ammonia can be recycled to the non-catalytic partial oxidation step in a much more energy efficient manner and also serves as a protection shield 8 of the burner nozzle against overheating. The vaporized unconverted ammonia solution is readily at a pressure level suitable for being used as a moderator steam. No compression is needed and the pressure of the unconverted ammonia solution does not need to be let down.

There are several ways of adjusting the amount of steam produced from the partial oxidation or of water steam fraction of the effluent gas, and thereby adjust the amount of steam available to condense and remove the unconverted ammonia, depending on its amounts.

For example, the feed pre-heat temperature can be adjusted to control the amount of steam produced from the partial oxidation. A higher feed pre-heat temperature means less steam produced from the non-catalytic partial oxidation : as less additional heat is required for the heat-up of the feed to the cracking conversion temperature thanks to a higher feed pre-heat temperature, less non-catalytic partial oxidation can occur, therefore less steam is produced by the partial oxidation.

Alternatively, the amount of moderator steam introduced into the reactor vessel 1 may be adjusted. This may be implemented by a suitable controller (not represented), measuring the concentration of unconverted ammonia in the ammonia solution and in response regulating the amount of moderator steam introduced. The overall amount of water steam fraction available from the process can thereby be adjusted to meet the amount of unconverted ammonia to be removed by absorption in the condensing step, without wasting too much energy in moderator steam generation. The concentration of unconverted ammonia in the ammonia solution can also be controlled this way.

As the moderator steam also has an effect on reducing the temperature of the flame, the nitrogen oxide formation can be controlled by a suitable controller (not represented), measuring the concentration of nitrogen oxide in the effluent gas and in response regulating the amount of moderator steam introduced.

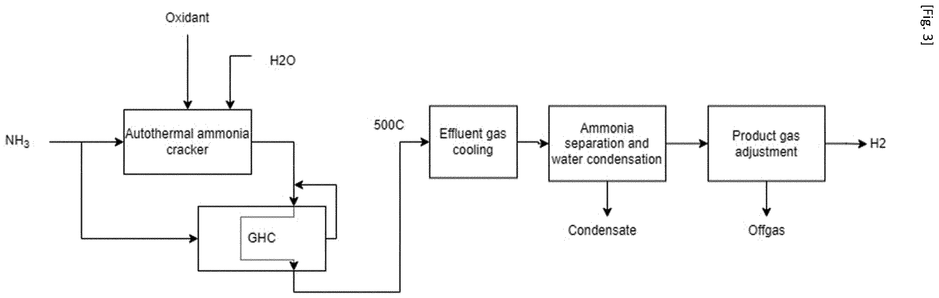

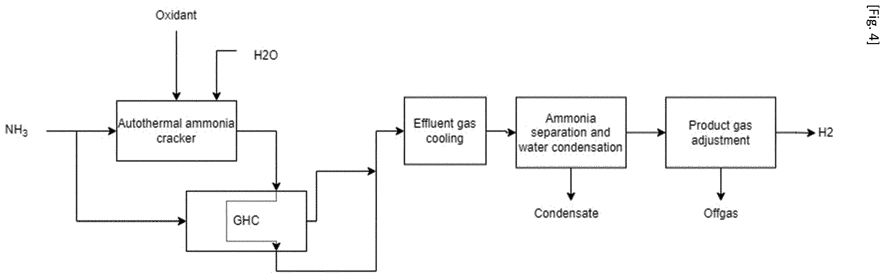

In the embodiment of figures 3 and 4, a secondary ammonia feed stream is derived from the ammonia feed stream and fed to a secondary cracker. The secondary cracker is a gas-heated cracker (GHC), heated by the discharged effluent gas. The secondary cracker produces a secondary effluent gas comprising hydrogen and nitrogen. In the embodiment of figures 3 and 4, the secondary effluent gas is combined with the effluent gas discharged from the reactor vessel 1 and the secondary cracker is fluidically arranged in parallel of the reactor vessel.

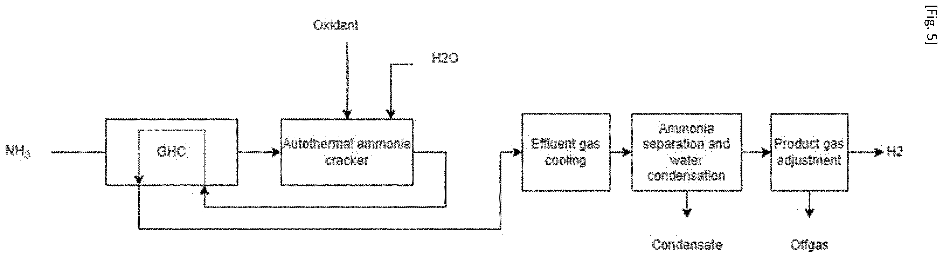

In the embodiment of figure 5, the ammonia feed stream undergoes a pre-cracking endothermal reaction, wherein a part of the ammonia feed stream is readily cracked to a pre-cracked ammonia feed stream comprising hydrogen, nitrogen and uncracked ammonia in a pre-cracker, before entering the reactor vessel 1. The pre-cracker is a gas-heated pre-cracker (GHC) fluidically connected upstream of the reactor vessel 1 and heated by the hot effluent gas discharged from the reactor vessel 1. The hydrogen from the pre-cracked ammonia feed stream stabilizes the non-catalytic partial oxidation and enhances the combustion properties in the reactor vessel 1.

The gas-heated cracker or the gas-heated pre-cracker can be a heat exchanger, having an effluent gas circulation section arranged in heat exchange relationship with an ammonia feed stream or secondary ammonia feed stream circulation section. The ammonia feed stream or secondary ammonia feed stream circulation section comprises a catalyst for promoting the secondary cracking or pre-cracking endothermal conversion. In the first variant of figure 3, the secondary effluent gas is combined with the effluent gas upstream of the effluent gas circulation section of the gas-heated cracker (GHC). By doing so, the hot secondary effluent gas also contributes to the heating of the gas-heated cracker. The secondary effluent gas may also be combined with the effluent gas downstream of the effluent gas circulation section of the gas-heated cracker, as depicted in the second variant of figure 4.

## Claims

1. Process for producing hydrogen from an ammonia feed stream, comprising the following steps :
- non-catalytic partial oxidation of the ammonia feed stream with an oxidant gas, thereby producing steam from the partial oxidation, remaining amounts of ammonia not being oxidized;
- endothermic cracking conversion of part of the remaining amounts of ammonia, thereby producing a cracked gas comprising hydrogen, nitrogen and some unconverted ammonia;
- mixing of the cracked gas with the steam produced from the partial oxidation, thereby obtaining an effluent gas;
- condensing of the steam produced from the partial oxidation, thereby removing at least part of the unconverted ammonia from the effluent gas by absorption.

2. Process according to the preceding claim, wherein the non-catalytic partial oxidation and the endothermic cracking conversion are performed in a single reactor vessel (1) comprising a burner (3), the non-catalytic partial oxidation of the ammonia feed stream being performed by partially burning the ammonia feed stream with the burner (3), the burner comprising a burner nozzle (2), the oxidant gas being introduced into the reactor vessel through the burner nozzle (2).

3. Process according to the preceding claim, comprising the following steps :
- introducing moderator steam into the reactor vessel (1) to protect the burner nozzle (2) from overheating,
- mixing of the moderator steam with the effluent gas,
- in the effluent gas, mixing of the moderator steam with the steam produced from the partial oxidation, thereby obtaining a water steam fraction of the effluent gas,
- condensing of the water steam fraction, thereby removing at least part of the unconverted ammonia from the effluent gas by absorption.

4. Process according to the preceding claim, wherein the condensing of the water steam fraction produces an unconverted ammonia solution comprising the absorbed unconverted ammonia.

5. Process according to the preceding claim, wherein at least part of the unconverted ammonia solution is vaporized and introduced as the moderator steam into the reactor vessel (1).

6. Process according to the preceding claim, wherein a first part of the unconverted ammonia solution is vaporized and introduced as moderator steam into the reactor vessel (1) and the unconverted ammonia of a second part of the unconverted ammonia solution is recovered in a gaseous form, in particular by distillation of said second part.

7. Process according to the preceding claim, wherein the unconverted ammonia of the second part of the unconverted ammonia solution is recycled to the non-catalytic partial oxidation step.

8. Process according to one of claim 4 to 7, the process comprising a step of adjusting the amount of moderator steam introduced into the reactor vessel (1) to control the concentration of unconverted ammonia in the unconverted ammonia solution.

9. Process according to one of claims 3 to 8, wherein the non-catalytic partial oxidation of the ammonia feed stream produces nitrogen oxides mixed within the effluent gas and the process comprises a step of adjusting the amount of moderator steam introduced into the reactor vessel (1) to control the amount of nitrogen oxides in the effluent gas.

10. Process according to one of the preceding claims, comprising a step of endothermic pre-cracking conversion of the ammonia feed stream prior to the non-catalytic partial oxidation, thereby producing a pre-cracked ammonia feed stream comprising hydrogen, nitrogen and uncracked ammonia, the non-catalytic partial oxidation step of the ammonia feed stream comprising a non-catalytic partial oxidation of the pre-cracked ammonia feed stream.

11. Process according to one of the preceding claims, comprising a step of pre-heating the ammonia feed stream at a feed pre-heat temperature prior to the non-catalytic partial oxidation, and a step of adjusting the feed pre-heat temperature to control an amount of steam produced from the partial oxidation.

12. Process according to one of the preceding claims, wherein the condensing of the steam produced from the partial oxidation is performed in a wash column.

13. Process according to the preceding claim, wherein part of the unconverted ammonia is removed from the effluent gas by absorption by the condensing of the steam produced from the partial oxidation and a remaining portion of unconverted ammonia is removed by further absorption in the wash column.

14. Process according to one of claims 12 or 13, wherein no additional water is introduced into the wash column.

15. Process according to one of the preceding claims, the process comprising a step of pre-cooling the effluent gas by direct water quench prior to condensing the steam produced from the partial oxidation.
